# EUROPÄISCHE PATENTSCHRIFT

(11) **EP 1 081 451 B1**
(45) Veröffentlichungstag und Bekanntmachung des Hinweises auf die Patenterteilung: **02.06.2004**
(21) Anmeldenummer: 00116516.6
(22) Anmeldetag: 31.07.2000
(51) Int. Cl.: F41H 7/02, F41H 7/04

(54) **Vorrichtung an Fahrzeugen, insbesondere an militärischen Kettenfahrzeugen**
Device mounted on a vehicle, especially a military tracked vehicle
Dispositif fixé sur un véhicule, en particulier un véhicule militaire chenillé

(30) Priorität: 31.07.1999 DE 19935573
(43) Veröffentlichungstag der Anmeldung: 07.03.2001
(73) Patentinhaber: Rheinmetall Landsysteme GmbH, 24159 Kiel (DE)
(72) Erfinder: Purmann, Kurt, Dr.Ing, 34260 Kaufungen (DE); Zeretzke, Norbert, Dipl.Ing, 37235 Hessisch-Lichtenau (DE); Schreckenberg, Klaus, 34246 Vellmar (DE)
(74) Vertreter: Dietrich, Barbara

(56) Entgegenhaltungen:
- EP-A- 0 828 134
- EP-A- 0 849 560
- DE-A- 19 631 715
- US-A- 4 841 838
- US-A- 5 533 781
- US-A- 5 663 520

## Beschreibung

Die Erfindung betrifft eine Vorrichtung an Fahrzeugen, insbesondere an militärischen Kettenfahrzeugen, zur Anpassung an veränderte Einsatzbedingungen, vorzugsweise zum Schutz vor Mineneinwirkung.

Aus der DE 196 43 757 ist ein Bausatz für eine Panzerung bekannt, der zum Schutz einer geschützten Zone hinter einer Basis gegen Splitter-Landminen geeignet ist. Dieser Bausatz enthält eine äußere Verschleißplatte, eine innere Fangplatte und eine stoßabsorbierende Zwischenschicht. Die Platten und die stoßabsorbierende Zwischenschicht sind miteinander verbunden und bilden eine Sandwichanordnung.

Die Verwendung eines solchen Bausatzes ist vorrangig auf einen Splitterschutz gerichtet. Infolge des speziellen Schichtaufbaues und der eingesetzten Materialien kann jedoch mit einem solchen Bausatz nicht verhindert werden, daß das Fahrzeug und die in diesem befindlichen Personen bei Minendetonation unzulässig hohen Beschleunigungen ausgesetzt sind.

Der Erfindung liegt daher die Aufgabe zugrunde, eine Vorrichtung zu entwickeln, von der auch hohe, aus einer Minenexplosion resultierende Kräfte und Beschleunigungen soweit reduziert werden, daß eine Gefährdung der Besatzung des Fahrzeuges nicht besteht und die Funktionsfähigkeit des Fahrzeuges erhalten bleibt.

Erfindungsgemäß ist die Vorrichtung als bedarfsweise am Fahrzeug montierbarer, im wesentlichen unter dem Fahrzeug anzuordnender Bausatz ausgeführt, der aus Fahr- oder Laufwerkskomponenten aufnehmenden Profilträgern und einer fahrzeugabgewandten, an die Profilträger anschließenden Schutzeinrichtung besteht, die in einem Bereich zwischen den Profilträgern abstützungsfrei ausgeführt ist und zum Fahrzeugboden beabstandet verläuft.

Die Erfindung ist mit dem Vorteil verbunden, daß infolge von Mineneinwirkung auftretende Kräfte, Impulse und Beschleunigungen für die im Fahrzeug befindlichen Personen auf ein zulässiges Maß reduziert werden.

Bei Detonation einer Mine wird die Schutzeinrichtung weitgehend elastisch in den abstützungsfreien Raum unter dem Fahrzeug gebogen, so daß der auf die Schutzeinrichtung einwirkende Impuls zeitlich verzögert an die Profilträger weitergeleitet wird. Durch die Absenkung der Fahr- oder Laufwerkskomponenten in den unter dem Fahrzeug befindlichen Bausatz ergibt sich bei ausreichender Bodenfreiheit des Fahrzeuges die Möglichkeit, die Schutzeinrichtung in einem solchen Abstand zum Fahrzeugboden anzuordnen, daß eine dynamische Ausbeulung der Schutzeinrichtung den Fahrzeugboden nicht erreicht oder aber auf diesen nur eine vernachlässigbare Energie überträgt.

In zweckmäßiger Ausgestaltung der Erfindung enthalten die Profilträger Laufrollentragelemente für die Laufrollen eines Kettenfahrzeuges. Die neben den am Bausatz befindlichen Laufrollen mit der Kette in Wirkverbindung stehenden Endantriebe und Leiträder verbleiben dabei vorzugsweise in ihren ursprünglichen Positionen am Fahrzeug. Insbesondere können in die Profilträger Drehstäbe eingesetzt sein, die mit den Laufrollen über Laufrollenschwingarme in Verbindung stehen.

Zur Schaffung eines weitgehend definierten Deformationsverhaltens des Bausatzes bei gleichzeitig ausreichender Stabilität sind die Profilträger vorzugsweise als in Fahrzeuglängsrichtung verlaufende Hohlprofile ausgeführt und bilden mit, die Hohlprofile endseitig verbindenden Querträgern einen geschlossenen Profilrahmen.

In weiterer Ausgestaltung der Erfindung ist zwischen dem Wannenboden eines Kettenfahrzeuges und den Profilträgern ein elastisches, stoßabsorbierendes Zwischenlager zur dynamischen Entkopplung der Laufwerkes von der Fahrzeugwanne und zur Schaffung einer Energieabsorptionszone bei Minendetonation vorgesehen, auf dem sich die Profilträger bei von unten auf das Fahrzeug gerichteter Kraft abstützen.

Gemäß einer zweckmäßigen Ausführung der Erfindung ist die Schutzeinrichtung des Bausatzes durchbrechungsfrei ausgebildet und kann aus einem auch unter Mineneinwirkung rißfestem Material bestehen. Als geeignet hat sich dabei eine an die Profilträger anschließende Stahlplatte erwiesen.

Zur Vergleichmäßigung des Energieeintrages in die Vorrichtung ist es von Vorteil, die Schutzeinrichtung als mehrschichtige Verbundplatte auszuführen, die bevorzugt eine elastische, stoßabsorbierende Zwischenschicht enthält.

Weiterhin sind gemäß einer zweckmäßigen Ausführung der Erfindung Aufbau und Deformationsverhalten der Vorrichtung derart gewählt, daß bei Minendetonation ein direkter Kontakt des Mittenbereiches der Schutzeinrichtung zum Fahrzeugwannenboden auch bei dynamischer Ausbeulung der Schutzeinrichtung unterbleibt.

Die Erfindung soll nachfolgend anhand eines Ausführungsbeispiels und zugehöriger Zeichnungen näher erläutert werden.

Es zeigen
- Fig. 1: eine Schnittdarstellung des unteren Bereiches der Fahrzeugwanne eines Kettenfahrzeuges mit angeflanschten Profilträgern und
- Fig. 2: eine Seitenansicht gemäß Fig. 1 mit an einem Profilträger aufgehängter Laufrolle.

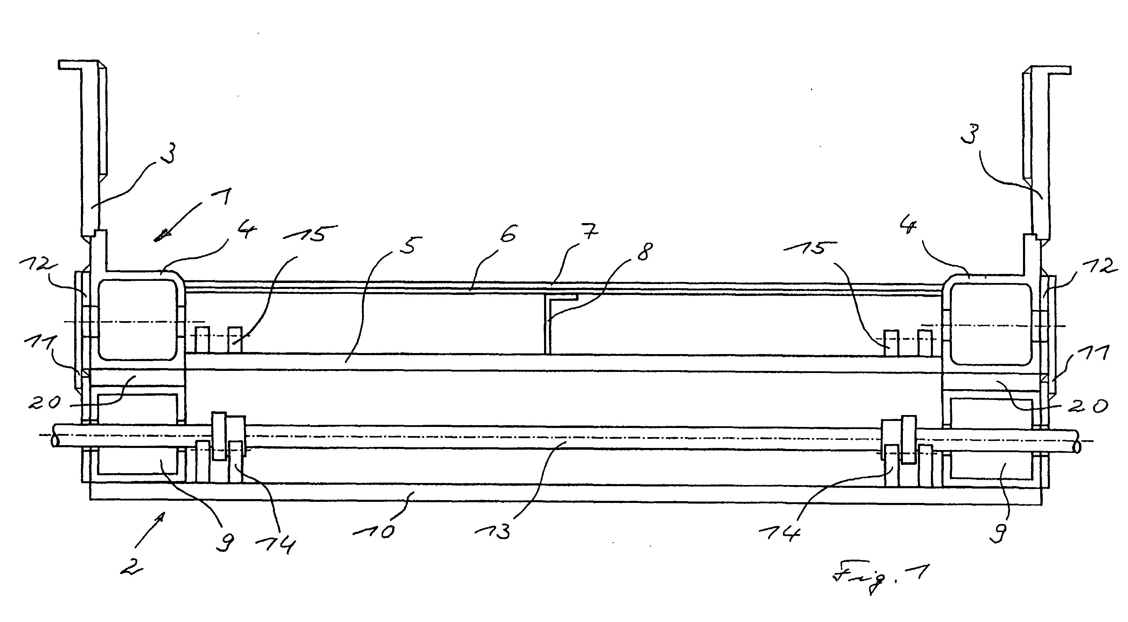

Von einem militärischen Kettenfahrzeug sind in Fig. 1 der untere Bereich der Fahrzeugwanne 1 und ein erfindungsgemäß ausgebildeter, sich nach unten an die Fahrzeugwanne 1 anschließender Bausatz 2 zum Schutz des Fahrzeuges vor Mineneinwirkung im Schnitt quer zur Fahrzeuglängsachse dargestellt.

Der untere Bereich der Fahrzeugwanne 1 weist im wesentlichen, wie dargestellt, Seitenwandteile 3, mit diesen starr verbundene, in Fahrzeuglängsrichtung verlaufende Eckprofile 4 und einen mit der Unterkante der Eckprofile 4 abschließenden, zwischen diesen angeordneten Wannenboden 5 auf.

Zum Wannenboden 5 verläuft beabstandet in einer Parallelebene ein, mit einem Versteifungsblech 6 versehener Innenboden 7, der durch einen Steg 8 auf dem Wannenboden 5 abgestützt ist.

Der Bausatz 2 beinhaltet in Fahrzeuglängsrichtung verlaufende Hohlprofile 9, eine, an die Unterseiten der Hohlprofile 9 anschließende und diese überdeckende Minenschutzplatte 10 und Verbindungselemente 11 zur Befestigung des Bausatzes 2 an der Fahrzeugwanne 1.

Die Verbindungselemente 11 sind starr, beispielsweise durch Verschweißen, mit den Hohlprofilen 9 verbunden, die ihrerseits in starrer Verbindung zur Minenschutzplatte 10 stehen.

Weiterhin sind die Verbindungselemente 11 und damit der Bausatz 2 über allgemein bekannte Befestigungsmittel an, auf den Außenseiten der Eckprofile 4 befindlichen Verstärkungsplatten 12 im unteren Bereich der Fahrzeugwanne 1 montiert, vorzugsweise unter Nutzung der ursprünglichen Befestigungslöcher 21 der Laufrollenschwingarme 16, wodurch Änderungen am Fahrzeug vermieden werden.

Die Hohlprofile 9 des Bausatzes 2 können Bestandteil eines Rechteckrahmens sein, indem quer zur Fahrzeuglängsachse verlaufende, mit den Hohlprofilen 9 verbundene Profilabschnitte vorgesehen werden.

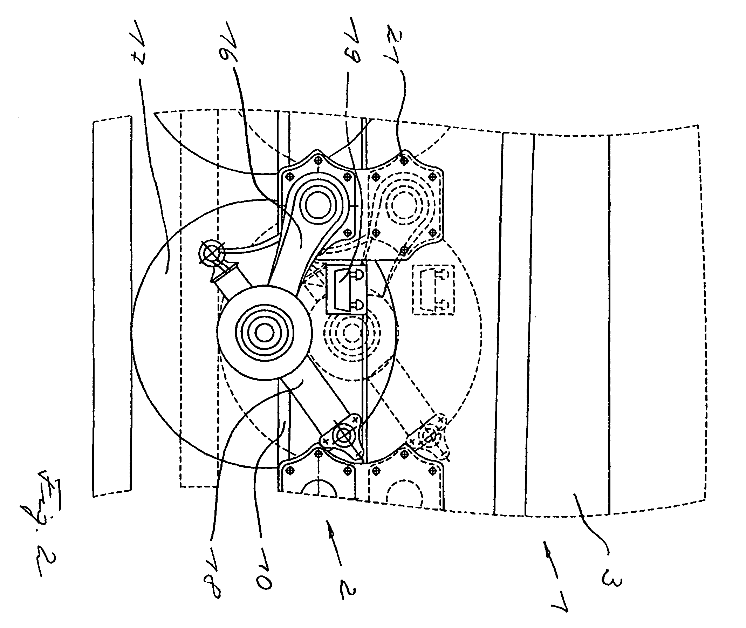

An der Minenschutzplatte 10 sind der Aufnahme von Drehstäben 13 dienende Anlenkungen 14 vorgesehen, die die Funktion der höherliegenden, ursprünglichen Drehstabanlenkungen 15 übernehmen. Mit den Drehstäben 13 stehen Laufrollenschwingarme 16 (Fig. 2) in Wirkverbindung, an denen die Laufrollen 17 angeordnet sind.

Des weiteren zeigt Fig. 2 eine Möglichkeit der Befestigung der Schwingungsdämpfer 18 und der Endanschläge 19 an einem der Hohlprofile 9 des Bausatzes 2, was der Darstellung in durchgezogenen Linien entspricht, im Gegensatz zur Darstellung in durchbrochenen Linien, die die Ausgangsanordnung von Laufrollenschwingarmen 16, Laufrollen 17, Schwingungsdämpfern 18 und Endanschlägen 19 am Fahrzeug ohne Einsatz der erfindungsgemäßen Vorrichtung erfaßt. Der Vergleich zeigt, daß bei im wesentlichen unveränderter Bodenfreiheit ein vergrößerter Raum unter dem Fahrzeug für Minenschutzmaßnahmen zur Verfügung steht.

Zwischen den Hohlprofilen 9 des Bausatzes 2 und den Eckprofilen 4 der Fahrzeugwanne 1 ist ein elastisches, stoßabsorbierendes Zwischenlager 20 vorgesehen (Fig. 1), über das eine Entkopplung des Laufwerkes des Kettenfahrzeuges von der Fahrzeugwanne 1 bei aus der Bewegung des Kettenfahrzeuges resultierenden dynamischen Belastungen erfolgen kann. Weiterhin wird über das Zwischenlager 20 auch ein Teil der in das Fahrzeug bei Minendetonation eingebrachten Energie abgebaut.

Für eine weitgehend vollständige Entkopplung des Laufwerkes von der Fahrzeugwanne 1 können Stoßabsorber auch im Bereich der Verbindungselemente 11 vorgesehen sein, so daß die Verbindungselemente 11 der Vertikalbewegung der Hohlprofile 9 folgen.

Kommt es zu einer Mineneinwirkung auf das Fahrzeug, so wird die Minenschutzplatte 10 infolge ihres überwiegend elastischen Verhaltens in den abstützungsfreien Raum unter dem Fahrzeug gebogen. Ein Teil der auf die Minenschutzplatte 10 einwirkenden Energie wird zeitverzögert an Energieabsorptionszonen, insbesondere an das Zwischenlager 20, weitergeleitet und in diesen teilweise in Deformationsenergie umgewandelt.

## Patentansprüche

1. Vorrichtung an Fahrzeugen, insbesondere an militärischen Kettenfahrzeugen, zur Anpassung an veränderte Einsatzbedingungen, vorzugsweise zum Schutz vor Mineneinwirkung, **dadurch gekennzeichnet, daß** die Vorrichtung als bedarfsweise am Fahrzeug montierbarer, im wesentlichen unter dem Fahrzeug anzuordnender Bausatz (2) ausgeführt ist, der aus Fahr- oder Laufwerkskomponenten (13,16,17,18) aufnehmenden Profilträgern (9) und einer fahrzeugabgewandten, an die Profilträger (9) anschließenden Schutzeinrichtung (10) besteht, die in einem Bereich zwischen den Profilträgern (9) abstützungsfrei ausgeführt ist und zum Fahrzeugboden (5) beabstandet verläuft.

2. Vorrichtung nach Anspruch 1, **dadurch gekennzeichnet, daß** die Profilträger (9) Laufrollentragelemente (13,16) für die Laufrollen (17) eines Kettenfahrzeuges enthalten.

3. Vorrichtung nach Anspruch 2, **dadurch gekennzeichnet, daß** in die Profilträger (9) Drehstäbe (13) eingesetzt sind, die mit den Laufrollen (17) über Schwingarme (16) in Verbindung stehen.

4. Vorrichtung nach Anspruch 2 oder 3, **dadurch gekennzeichnet, daß** die Profilträger als in Fahrzeuglängsrichtung verlaufende Hohlprofile (9) ausgeführt sind und mit, die Hohlprofile (9) endseitig verbindenden Querträgern einen geschlossenen Profilrahmen bilden.

5. Vorrichtung nach Anspruch 2, **dadurch gekennzeichnet, daß** zwischen dem Wannenboden (5) eines Kettenfahrzeuges und den Profilträgern (9) ein elastisches, stoßabsorbierendes Zwischenlager (20) zur dynamischen Entkopplung des Laufwerkes von der Fahrzeügwanne (1) und zur Schaffung einer Energieabsorptionszone bei Minendetonation vorgesehen ist, auf dem sich die Profilträger (9) bei von unten auf das Fahrzeug gerichteter Krafteinwirkung abstützen.

6. Vorrichtung nach Anspruch 1, **dadurch gekennzeichnet, daß** die Schutzeinrichtung (10) durchbrechungsfrei ausgebildet ist.

7. Vorrichtung nach Anspruch 1 oder 6, **dadurch gekennzeichnet, daß** die Schutzeinrichtung (10) aus einem auch unter Mineneinwirkung rißfestem Material besteht.

8. Vorrichtung nach Anspruch 7, **dadurch gekennzeichnet, daß** es sich bei der Schutzeinrichtung (10) um eine Stahlplatte handelt.

9. Vorrichtung nach Anspruch 1 oder 7, **dadurch gekennzeichnet, daß** die Schutzeinrichtung (10) als mehrschichtige Verbundplatte ausgeführt ist.

10. Vorrichtung nach Anspruch 9, **dadurch gekennzeichnet, daß** die Schutzeinrichtung (10) eine elastische, stoßabsorbierende Zwischenschicht enthält.

11. Vorrichtung nach Anspruch 1, **dadurch gekennzeichnet, daß** deren Aufbau und Deformationsverhalten derart gewählt sind, daß bei Minendetonation ein direkter Kontakt des Mittenbereiches der Schutzeinrichtung (10) zur Fahrzeugwanne (1) auch bei dynamischer Ausbeulung der Schutzeinrichtung (10) unterbleibt.

## Claims

1. Apparatus on vehicles, in particular on military tracked vehicles, for adapting to altered deployment conditions, preferably for protecting against the effect of mines, **characterized in that** the apparatus takes the form of a construction kit (2), which, when required, is mountable on the vehicle and is to be disposed substantially under the vehicle and which comprises structural members (9), which accommodate travelling or running gear components (13, 16, 17, 18), and a vehicle-remote protection device (10), which adjoins the structural members (9) and in a region between the structural members (9) is designed free of support and extends at a distance from the vehicle floor (5).

2. Apparatus according to claim 1, **characterized in that** the structural members (9) contain track roller supporting elements (13, 16) for the track rollers (17) of a tracked vehicle.

3. Apparatus according to claim 2, **characterized in that** torsion bars (13) are inserted into the structural members (9) and connected to the track rollers (17) by suspension arms (16).

4. Apparatus according to claim 2 or 3, **characterized in that** the structural members take the form of hollow sections (9) extending in vehicle longitudinal direction and together with cross-members connecting the ends of the hollow sections (9) form a closed section frame.

5. Apparatus according to claim 2, **characterized in that** between the trough base (5) of a tracked vehicle and the structural members (9) an elastic, shock-absorbing intermediate bearing (20) is provided for dynamically uncoupling the running gear from the vehicle trough (1) and for creating an energy absorption zone in the event of mine detonation, on which intermediate bearing (20) the structural members (9) are supported under the action of a force directed from below towards the vehicle.

6. Apparatus according to claim 1, **characterized in that** the protection device (10) is of a design free of through-openings.

7. Apparatus according to claim 1 or 6, **characterized in that** the protection device (10) is made of a material, which is crack-resistant under the effect of a mine.

8. Apparatus according to claim 7, **characterized in that** the protection device (10) is a steel panel.

9. Apparatus according to claim 1 or 7, **characterized in that** the protection device (10) takes the form of a multilayer composite panel.

10. Apparatus according to claim 9, **characterized in that** the protection device (10) contains an elastic, shock-absorbing intermediate layer.

11. Apparatus according to claim 1, **characterized in that** its construction and deformation behaviour are selected in such a way that in the event of mine detonation a direct contact of the central region of the protection device (10) with the vehicle trough (1) does not occur even in the event of dynamic buckling of the protection device (10).

## Revendications

1. Dispositif sur véhicules, en particulier sur véhicules militaires à chenilles, pour l'adaptation à des conditions de mise en oeuvre modifiées, de préférence pour la protection contre les effets des mines, **caractérisé en ce que** le dispositif est réalisé sous la forme d'un module (2) à monter selon les besoins, essentiellement sous le véhicule, qui est constitué de longerons profilés (9) recevant des organes de roulement (13, 16, 17, 18) et d'un agencement de protection (10) tourné à l'opposé du véhicule, se raccordant aux longerons profilés (9) qui est réalisé sans appui dans une zone entre les longerons profilés (9) et s'étend avec un intervalle par rapport au fond (5) du véhicule.

2. Dipositif selon la revendication 1, **caractérisé en ce que** les longerons profilés (9) comportent des éléments de support de galets de roulement (13, 16) pour les galets de roulement (17) d'un véhicule à chenille.

3. Dipositif selon la revendication 2, **caractérisé en ce que** dans les longerons profilés (9) sont installées des barres de torsion (13), qui sont en liaison avec les galets de roulement (17) par l'intermédiaire de bras oscillants (16).

4. Dipositif selon la revendication 2 ou 3, **caractérisé en ce que** les longerons profilés sont réalisés par des profils creux (9) s'étendant dans la direction longitudinale du véhicule et forment, avec des traverses reliant les longerons profilés (9) à leurs extrémités, un cadre profilé fermé.

5. Dipositif selon la revendication 2, **caractérisé en ce qu'**un palier intermédiaire (20), élastique et absorbant les chocs, pour découpler dynamiquement le train de roulement de la caisse (1) du véhicule et pour créer une zone d'absorpsion lorsqu'une détonation de mine se produit, est prévu entre le fond (5) de la caisse d'un véhicule à chenilles et les longerons profilés (9) et sur lequel s'appuient les longerons profilés (9) sous l'effet d'une force appliqué depuis le bas sur le véhicule.

6. Dipositif selon la revendication 1, **caractérisé en ce que** l'agencement de protection (10) est constitué sans perforation.

7. Dipositif selon la revendication 1 ou 6, **caractérisé en ce que** l'agencement de protection (10) est réalisé en un matériau non fissurable, même sous l'effet d'une mine.

8. Dipositif selon la revendication 7, **caractérisé en ce que** pour l'agencement de protection (10), il s'agit d'une plaque d'acier.

9. Dipositif selon la revendication 1 ou 7, **caractérisé en ce que** l'agencement de protection (10) est formé d'une plaque composite multicouche.

10. Dipositif selon la revendication 9, **caractérisé en ce que** l'agencement de protection (10) comporte une couche intermédiaire élastique absorbant les chocs.

11. Dipositif selon la revendication 1, **caractérisé en ce que** sa structure et son comportement à la déformation sont choisis de telle sorte que, lors d'une détonation de mine, un contact direct de la partie médiane de l'agencement de protection (10) avec la caisse (1) du véhicule soit empêché, même lors d'un cabossage dynamique.
